# EUROPÄISCHE PATENTANMELDUNG

(11) **EP 0 551 533 A1**
(43) Veröffentlichungstag der Anmeldung: **21.07.1993**
(21) Anmeldenummer: 92100367.9
(22) Anmeldetag: 13.01.1992
(51) Int. Cl.: H02K 53/00

(54) **Magnetfeldenergie-Umwandler zur wahlweisen Verwendung als Motor und Generator**

(71) Anmelder: FORSCHUNGSGESELLSCHAFT MAGNETFELD ENERGIE (FME), D-31275 Lehrte (DE)
(72) Erfinder: Seibel, Wilhelm, Prof., Dipl.-Ing., D-6242 Kronberg (DE)

(57) **Zusammenfassung**

Jede Energie-Erzeugung beruht auf der Umwandlung von einer Energieform in eine andere. Als Primärenergieträger standen bisher die Fossilenergien Kohle, Erdöl und Erdgas zur Verfügung, die sich auf unserem Planeten Erde in Millionen von Jahren gebildet haben und von uns Menschen in einem Zeitraum von nur 3oo bis 4oo Jahren aufgebraucht sein dürften.Leider haben aber auch die bei ihrer Verbrennung auftretenden Umweltbelastungen bereits Formen angenommen, die das künftige Leben auf unserer Erde immer mehr in Frage stellen.

Die hierdurch auftretenden Energieprobleme können mit der risikobehafteten Kernenergie weltweit nicht gelöst werden. So ist es beispielsweise nicht möglich den leitungsgebundenen Atomstrom in die Länder der Dritten Welt zu transportieren und für deren Bewohner, die künftig mehr als die Hälfte der Erdbevölkerung stellen, dürften - ohne Energie - keine Lebensgrundlagen mehr vorhanden sein.

Eine Nutzung der bekannten Alternativenergien Sonne und Wind ist aus wirtschaftlichen Gründen schlecht möglich, weil diese Energieträger in ihrer Leistung nicht konstant und nur zu unterschiedlichen Zeiten zur Verfügung stehen und für die Überbrükkungen die erforderlichen Speicherkapazitäten fehlen. Bereits im Jahre 1932 hat der weltbekannte Physiker und Nobelpreisträger, Prof.Dr.Werner Heisenberg, vorausgesagt: " ich denke es wird bald möglich sein den Magnetismus als Energiequelle zu nutzen." Erst heute sind wir in der Lage diese Vorhersage zu realisieren, nachdem mit der Entwicklung von NdFeB-Hochenergie-Dauermagneten die Voraussetzungen hierfür geschaffen wurden. Die von ihnen gelieferte Magnetfeldenergie steht allen Menschen, an jedem Ort und zu jeder Zeit konstant zur Verfügung. Ihre wirtschaftliche und umweltfreundliche Umwandlung in Rotations- oder Elektroenergie ist Sinn und Zweck der Erfindung eines Magnetfeldenergie-Umwand = lers, der am Ort des Energiebedarfs eingesetzt werden kann.

Mit der Erfindung wird ein wesentlicher Beitrag geleistet zur weltweiten Lösung der Energieprobleme und Ökonomie und Ökologie auf einen Nenner gebracht.

## Beschreibung

### A) Vorbemerkungen:

Die Nutzung von Magnetfeldenergie wurde erst möglich mit der in güngster Zeit erfolgten Entwicklung von NdFeB-Hoch = energie-Dauermagneten, die sich durch eine hohe Remanenz B, ( = Zahl der magnetischen Kraftlinuen pro Flächeneinheit, gemessen in Gauß oder Tesla), ihre hohe Koerzitivfeldstärke Hₑ ( = Verankerung des Magnetismus im Werkstoff gegen entmagnetisierende Einflüsse, gemessen in kA/m) und das hohe Energieprodukt ( B x H )ₘₐₓ auszeichnen.Dabei ist die wichtigste magnetische Kenngröße der letztgenannte Wert, als die vom Dauermagneten zur Verfügung gestellte magnetische Energie. Aufgrund ihrer überragenden Dauermagneteigenschaften, dem einfachen Aufbau der Dauermagnetsysteme (keine Stromzuführung erforderlich) und dem praktisch wartungsfreien Betrieb wird dieses Magnetmaterial immer mehr Anwendungsgebiete erschließen. Hierbei werden die Kräfte ausgenutzt, die Dauermagnete aufeinander, oder auf andere magnetisierende Teile ausüben. Diese Kräfte wirken ohne weitere Energiezufuhr, berührungslos und über gewissen Entfernungen hinweg. Das beste Beispiel hierfür liefert die in jüngster Zeit entwickelte Magnetschwebebahn, bei der die NdFeB-Dauermagnete eine doppelte Funktion erfüllen, indem die magnetischen Abstoßungskräfte die tonnenschweren Wagen ca 1o bis 12 mm von den Schienen abheben, während der Fahrt berührungsfrei und geräuschlos im Schwebezustand halten und gleichzeitig,als Teil eines Linearmotors, den Fahrweg entlang ziehen. Diese Magnetmechanik ist nur bei spurgebundenen Verkehrsmitteln anwendbar und sie ist, ohne weiteres, nicht übertragbar auf die Umwandlung von Magnetfeldenergie in Rotations- oder Elektroenergie.

### B) Erfindung, Konstruktion, Funktion:

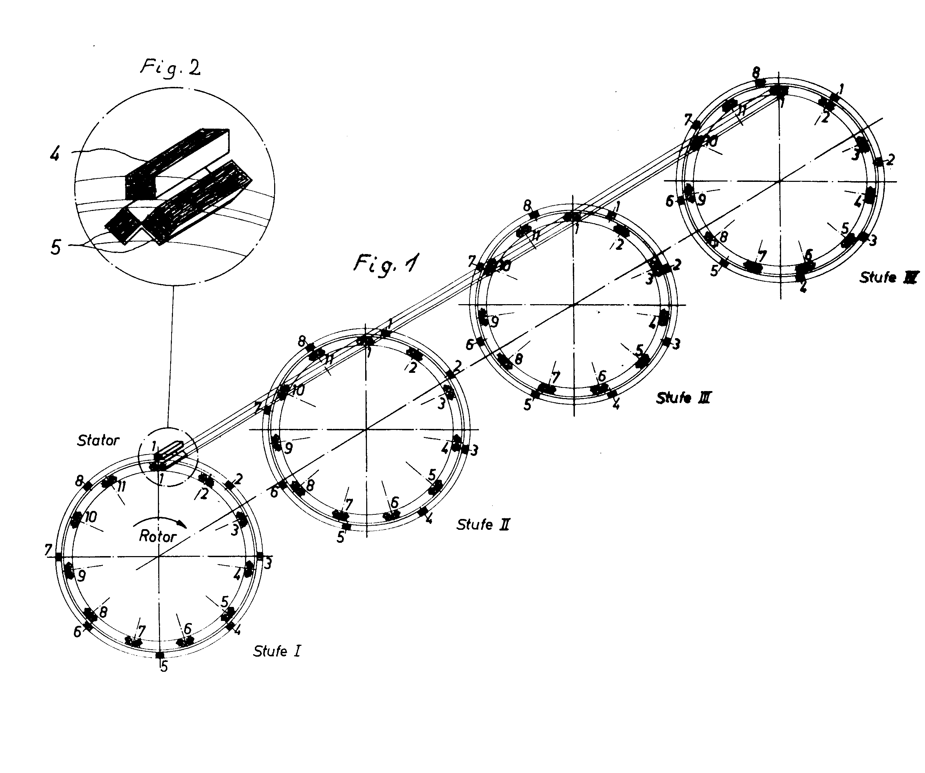

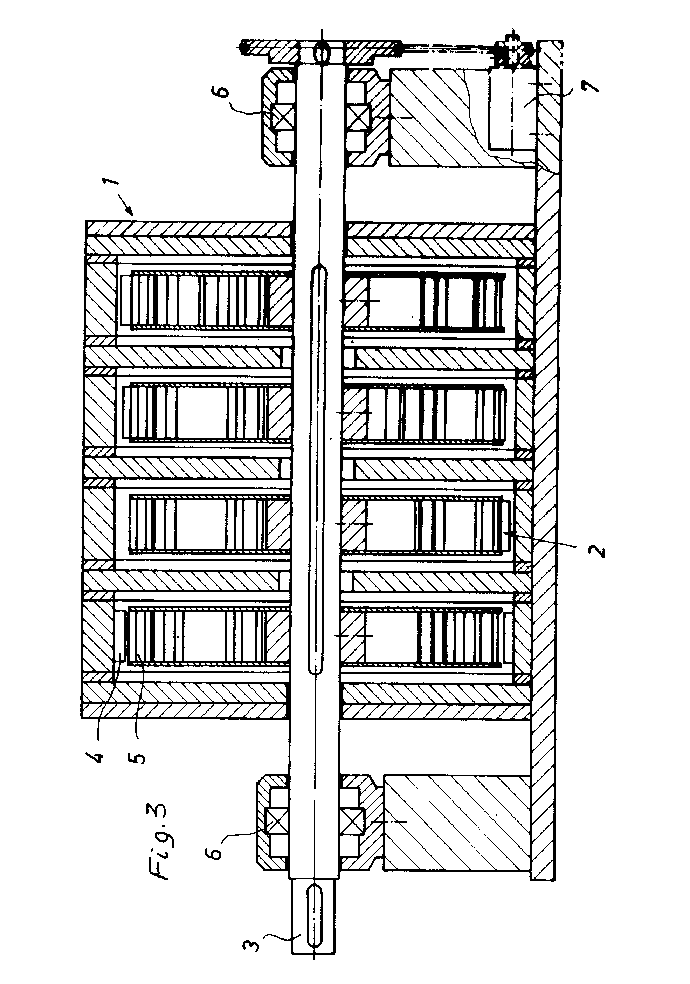

Der Magnetfeldenergie-Umwandler besteht ausschließlich aus diamagnetischen Werkstoffen. Daher können auch keine Eisen-, Wärme- und Wirbelstromverluste auftreten, die bei einem konventionellen Motor oder Generator durch Antriebsleistung kompensiert werden müssen. Je nach der gewünschten Leistungsabgabe besteht er aus mehreren Stufen (Fig.1 / I-II-III-IV) und zu jeder Stufe gehören ein Stator und ein Rotor (Fig.1 und Fig.3 / 4 u.5). Die Rotore sind auf einer gemeinsamen Welle (Fig.3 / 3) montiert, deren Enden kugelgelagert sind (Fig.3 / 6). Die verwendeten NdFeB-Hochenergie-Dauermagnete sind diametral magnetisiert (Fig.2 / 4 u.5), wodurch sich große Polflächen und eine hohe magnetische Flußdichte ergeben (siehe Remanenz). Ferner sind die magnetischen Kraftlinien der einzelnen Magnete, mittels Rückschlußplatten, eng gebündelt (keine Streuung), was einerseits eine 1₀₀ %ige Energienutzung bewirkt und andererseits es möglich ist eine große Anzahl von Stator-und Rotormagneten auf engstem Raum unterzubringen (Fig.1), ohne gegenseitige Beeinflussung ihrer Kraftlinienfelder.

In den einzelnen Statorstufen sind kreisförmig eine gerade Zahl von Dauermagneten (Fig.1 / 1-8) angebracht, mit ihrem N-Pol zum Rotor zeigend (Fig.2 / 4) und in der dazugehörigen Rotorscheibe kreisförmig eine ungerade Zahl von Zwillings-Dauermagneten, unter einem Winkel von 45 Grad angebracht, deren S-Pole in Drehrichtung des Rotors und deren N-Pole entgegen derselben zeigen (Fig.1 /1-11 und Fig.2 / 5) Beispiel 1 mit 4 Stufen: (Fig.1) je Stufe 8 Statormagnete, jeweils um 36o : 8 = 45 Grad versetzt, 11 Rotor-Zwillingsmagnete, jeweils um 36o : 11 = 32,7 Grad versetzt, und die Statormagnete von Stufe zu Stufe nochmals um 45 : 4 = 11,25 Grad versetzt, während die Rotormagnete in allen 4 Stufen synchron angeordnet sind, oder

Beispiel 2 mit 4 Stufen:
je Stufe
1 Statormagnete, jeweils um 360 : 10 = 36 Grad versetzt,
13 Rotor-Zwillingmagnete, um 360 : 13 = 27,6 Grad versetzt, und die Statormagnete von Stufe zu Stufe nochmals um 36 : 4 = 9 Grad versetzt sind, während die Rotormagnete synchron angeordnet sind.

Hierdurch ergibt sich über die 4 Stufen eine spiralförmige Magnetanordnung (Fig.1). Nach Beispiel 1 steht bei jeder Drehung des Rotors um 11,25 Grad ein Rotormagnet einem Statormagneten gegenüber, beide befinden sich in ..neutralem" Zustand, während 10 Rotormagnete mit den Statormagneten, in Drehrichtung des Rotors, sich im anziehenden" oder abstoßenden" Zustand befinden (Fig.1). Hierdurch entsteht in jeder Stufe ein magnetisches Kräfteverhältnis von 10 : 1 , und in allen 4 Stufen von 40 : 4, welches in Drehrichtung des Rotors wirksam wird und ein arbeitsleistendes Drehmoment erzeugt.

Da ruhende Magnetfelder keinen verwertbaren Energieüberschuß liefern, müssen sie in Rotation versetzt werden, was durch einen elektronischen Drehzahlsteller (Fig.3 / 7) erfolgt, der aus einer Autobatterie 12 Volt gespeist wird. Gleichzeit wird mit ihm die für die Leistungsabgabe erforderliche Drehzahl vorgegeben.

Dieses magnetische Antriebskonzept (Motor) kann durch den Einbau von Induktionsspulen, zwischen den vorhandenen Statormagneten, in Verbindung mit den rotierenden Kraftlinien der Rotormagnete, zum Generator umgerüstet werden. Die Induktionsspulen bestehen aus zwei Wicklungen, einer Spannungswicklung mit dünnen Drähten und einer Stromwicklung mit stärkeren Drähten, und sie sind als Hohlspulen (ohne Eisenkern) ausgebildet. In Verbindung mit einem Gleichrichter und einem Kondensator bilden sie ein Stromerzeugungssystem" (Bausatz), welches Gleichspannung abgibt. Die Stromerzeugungssysteme können beliebig in Reihe, zur Erhöhung der EMK (Spannung) oder parallel geschaltet werden zur Erhöhung der entnehmbaren Stromstärke. Da sie austauschbar befestigt sind, können sie ferner gegen solche mit anderen Wicklungen ausgewechselt werden, zwecks Änderung von Spannung und Strom.

Die Stromerzeugung erfolgt im Stator, sodaß die üblichen und verlustbringenden Stromabnehmer (Schleifringe und Bürsten) entfallen, ferner ist die Zuführung einer Erregerspannung nicht orforderlich.

Die Leistungsabgabe des Magnetfeldenergie-Umwandlers richtet sich nach der Anzahl der Stufen, der Zahl und dem Volumen der NdFeB-Dauermagneten und der vorgegebenen Drehzahl mittels elektronischem Drehzahlsteller.

Die Funktionsfahigkeit der Erfindung wird anhand eines Labormodells nachgewiesen.

## Patentansprüche

1. Magnetfeldenergie-Umwandler zur wahlweisen Verwendung als Motor oder Generator.
Kennzeichnender Teil:

2. Magnetfeldenergie-Umwandler, dadurch gekennzeichnet,daß er 1₀₀ %ig aus diamagnetischen Werkstoffen besteht und hierdurch die üblichen Eisen-, Wärme- und Wirbelstromverluste nicht auftreten, die bei einem konventionellen Motor oder Generator durch Antriebsleistung kompensiert werden müssen.

3. Magnetfeldenergie-Umwandler, dadurch gekennzeichnet, daß er, je nach Leistung, aus mehreren Stufen besteht (Fig.1/ I-II-III-IV) und zu jeder Stufe ein Stator und ein Rotor gehören (Fig.1 und Fig.3 /4,5).

4. Magnetfeldenergie-Umwandler, dadurch gekennzeichnet,daß die verwendeten NdFeB-Hochenergie-Dauermagnete diametral magnetisiert sind (Fig.2 / 4,5), wodurch sich große Polflächen und damit eine hohe magnetische Flußdichte ergeben.

5. Magnetfeldenergie-Umwandler, dadurch gekennzeichnet, daß die magnetischen Kraftlinien der einzelnen Magnete mittels Rückschlußplatten eng gebündelt sind, hierdurch nicht streuen und ihre Energie nahezu 1oo Prozent genutzt werden kann, ferner sich gegenseitig nicht beeinflussen.

6. Magnetfeldenergie-Umwandler, dadurch gekennzeichnet, daß in jeder Stufe eine gerade Zahl von Statormagneten kreisförmig angeordnet und um einige Grad versetzt sind(Fig.1 / 1-8) und diese einer ungeraden Zahl von kreisförmig angeordneten Rotor-Zwillingsmagneten (Fig.1 / 1-11) gegenüberstehen und sich hierdurch eine spiralförmige Magnetanordnung über alle vier Stufen ergibt.

7. Magnetfeldenergie-Umwandler, dadurch gekennzeichnet,daß die N-Pole der Statormagnete zu den Rotormagneten zeigen (Fig. 1 / 1-8 und Fig.2 / 4) und die Rotor-Zwillingsmagnete mit ihrem S-Pol in Drehrichtung und dem N-Pol entgegen derselben zeigen (Fig. 1/1-11 u,Fig.2 / 5)

8. Magnetfeldenergie-Umwandler, dadurch gekennzeichnet, daß durch die spiralförmige Anordnung die Magnetkräfte der Statormagnete (Fig.1 / 1-8) in Zusammenwirkung mit den Rotor- Zwillingsmagneten (Fig.1 / 1-11) ein arbeitsleistendes Drehmoment erzeugen, indem ihre anziehenden Magnetkräfte S - N und ihre abstoßenden Magnetkräfte N - N abwechseln in Drehrichtung des Rotors wirksam werden (Fig.1).

9. Magnetfeldenergie-Umwandler, dadurch gekennzeichnet, daß - da ruhende Magnetfelder keinen verwertbaren Energieüberschuß liefern - diese mit einem elektronischen Drehzahlsteller, der aus einer Autobatterie 12 Volt gespeist wird, über die Rotorwelle in Rotation versetzt werden und mit diesem Drehzahlsteller auch die erforderliche Drehzahl vorgegeben wird (Fig.3 / 7).

10. Magnetfeldenergie-Umwandler, dadurch gekennzeichnet, daß durch den Einbau von Induktionsspulen, zwischen den Statormagneten, in Verbindung mit den rotierenden Kraftlinien der Rotormagnete, ein Induktionsstrom erzeugt wird.

11. Magnetfeldenergie-Umwandler, dadurch gekennzeichnet, daß die Induktionsspulen aus zwei Wicklungen bestehen, einer Spannungswicklung mit dünnen Drähten und einer Stromwicklung mit stärkeren Drähten und als Hohlspulen (ohne Eisenkern) ausgebildet sind.

12. Magnetfeldxnergie-Umwandler, dadurch gekennzeichnet, daß die Induktionsspulen in Verbindung mit einem Gleichrichter und einem Kondensator ein Stromerzeugungssystem (Bausatz) bilden, welches Gleichspannung abgibt und auswechselbar befestigt ist.

13. Magnetfeldenergie-Umwandler, dadurch gekennzeichnet, daß die Stromerzeugungssysteme beliebig in Reihe zur Erhöhung der Spannung oder parallel geschaltet werden können zur Erhöhung der entnehmbaren Stromstärke.

14. Magnetfeldenergie-Umwandler dadurch gekennzeichnet, daß die Stromerzeugungssysteme gegen solche mit anderen Wicklungen , zwecks Änderung von Spannung und Strom, ausgetauscht werden können.

15. Magnetfeldenergie-Umwandler, dadurch gekennzeichnet, daß die Stromerzeugung im Stator erfolgt und dadurch die aufwendigen und verlustbringenden Stromabnehmer (Schleifringe und Bürsten) entfallen, ferner die Zuführung einer Erregerspannung nicht erforderlich ist.

16. Magnetfeldenergie-Umwandler, dadurch gekennzeichnet, daß seine Leistungsabgabe bestimmt wird von der Anzahl der Stufen, der Anzahl und dem Volumen der installierten Hochenergie-Dauermagneten und beliebig reguliert werden kann durch die stufenlose Änderung der Drehzahl mit dem elektronischen Drehzahlsteller.
